(19) **Europäisches Patentamt**
**European Patent Office**
**Office européen des brevets**

(11) **EP 4 317 391 A1**

(12) **EUROPEAN PATENT APPLICATION**
published in accordance with Art. 153(4) EPC

(43) Date of publication:
**07.02.2024 Bulletin 2024/06**

(21) Application number: **22780318.6**

(22) Date of filing: **22.03.2022**

(51) International Patent Classification (IPC):
*C12C 5/02* (2006.01)     *C12C 12/04* (2006.01)
*C12G 3/04* (2019.01)     *A23L 2/00* (2006.01)

(52) Cooperative Patent Classification (CPC):
**A23L 2/00; C12C 5/02; C12C 12/04; C12G 3/04**

(86) International application number:
**PCT/JP2022/013190**

(87) International publication number:
**WO 2022/210103 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.03.2021 JP 2021055873**

(71) Applicant: **Asahi Group Holdings, Ltd.
Tokyo 130-8602 (JP)**

(72) Inventors:
• **NAKAYAMA, Wataru**
**Moriya-shi, Ibaraki 302-0106 (JP)**
• **MATSUSHIMA, Takemasa**
**Moriya-shi, Ibaraki 302-0106 (JP)**
• **NAKAKAWAJI, Shingo**
**Moriya-shi, Ibaraki 302-0106 (JP)**

(74) Representative: **Müller-Boré & Partner
Patentanwälte PartG mbB
Friedenheimer Brücke 21
80639 München (DE)**

(54) **LOW-ALCOHOL BEER-TASTE BEVERAGE AND METHOD FOR MANUFACTURING SAME**

(57)    An object of the present invention is to provide a low-alcohol beer-taste beverage having a beer-like complex taste and barley-like sweetness, having a good balance between sourness and sweetness, and exhibiting a refreshing aftertaste. A means for solving the problem is a low-alcohol beer-taste beverage containing more than 100 mg/L and less than 600 mg/L of proline, and more than 25 mg/L and less than 200 mg/L of acetic acid.

EP 4 317 391 A1

**Description**

[Technical Field]

The present invention relates to a low-alcohol beer-taste beverage, and more particularly to a low-alcohol beer-taste beverage having an alcohol concentration of less than 1 v/v%. "Beer taste" means the taste and aroma reminiscent of beer. "Beer" means a beverage obtained by using as raw materials malt, hops, water and the like, and fermenting these.

[Background Art]

There is known a low-alcohol beer-taste beverage obtained by subjecting beer after fermentation to an alcohol-removing treatment to remove alcoholic components. The fermented and dealcoholization treated beer-taste beverages have a light flavor because the sweetness of the alcohol itself is removed and the aroma peculiar to beer is removed by removing the alcoholic components, and therefore they are insufficient as beverages in terms of both the aroma and the taste.

Patent Document 1 discloses a carbonated beverage having a beer-like flavor, and having an improved balance of sweetness, throat feeling of drinking and sharpness. The carbonated beverage is that prepared by adding malt extract to for flavoring, and by further adjusting the saccharide composition of a fermented and dealcoholization treated beer-taste beverage.

Patent Document 2 discloses a beer-taste beverage containing a specific amount of proline, and substantially not containing a bitterness component derived from hops. The beer-taste beverage of Patent Document 2 is a beer-taste beverage having umami and sweetness reminiscent of beer.

Patent Document 3 discloses a beer-flavored non-alcoholic beverage having a pH of 4.2 to 4.7, containing as main components vinegar or malt vinegar obtained by subjecting beer to acetic acid fermentation, and wort, and containing substantially no alcohol. The beer-flavored non-alcoholic beverage of Patent Document 3 is a non-alcoholic beverage having a flavor similar to beer.

[Prior Art Documents]

[Patent Documents]

[Patent Document 1] JP 2003-250503 A
[Patent Document 2] JP 2020-103272 A
[Patent Document 3] JP 2018-148838 A

[Summary of the invention]

[Problems to be solved by Invention]

The low-alcohol beer-taste beverages have a low content of alcohol and volatile aroma components, and lack a beer-like complex taste and likeness of barley. When malt extract or proline is added for the purpose of reproducing the beer-like umami, sweetness, and complex taste, the balance between sourness and sweetness is lost, and there arises a problem that a refreshing aftertaste cannot be obtained.

The present invention solves the above-mentioned problems, and an object thereof is to provide a low-alcohol beer-taste beverage having a beer-like complex taste and barley-like sweetness, having a good balance between sourness and sweetness, and exhibiting a refreshing aftertaste.

[Means for solving the problems]

The present invention provides a low-alcohol beer-taste beverage containing more than 100 mg/L and less than 600 mg/L of proline, and more than 25 mg/L and less than 200 mg/L of acetic acid.

In one embodiment, the concentration of proline is 150 to 550 mg/L.

In one embodiment, the concentration of acetic acid is 40 to 160 mg/L.

In one embodiment, the ratio of acetic acid concentration B [mg/L] to proline concentration A [mg/L] in the low-alcohol beer taste beverage B/A is 0.073 to 1.06.

In one embodiment, the ratio B/A is 0.17 to 0.50.

In one embodiment, the low-alcohol beer-taste beverage has a bitterness value of 10 to 50 BU.

In one embodiment, the low-alcohol beer-taste beverage has an apparent extract concentration of 1 to 10 w/v%.

In one embodiment, the low-alcohol beer-taste beverage contains a component derived from a wort fermented liquid.

In one embodiment, the wort fermented liquid is a wort bottom fermented liquid.

In one embodiment, the wort fermented liquid has a malt use ratio of 50 w/w% or more.

In one embodiment, the wort fermented liquid is an alcohol-removed wort fermented liquid.

Also, the present invention provides a method for producing a low-alcohol beer-taste beverage comprising: adjusting the concentration of proline contained in a low-alcohol beer-taste beverage from more than 100 mg/L to less than 600 mg/L, and adjusting the concentration of acetic acid contained therein from more than 25 mg/L to less than 200 mg/L.

[Effect of the invention]

According to the present invention, it is possible to provide a low-alcohol beer-taste beverage having a complex beer-like taste like beer and barley-like sweetness, having a good balance between sourness and sweetness, and exhibiting a refreshing aftertaste.

[Embodiment of the invention]

In the present specification, the term "step" is included in this term not only as an independent step but also as long as the intended purpose of the step is achieved even if it cannot be clearly distinguished from other steps. Further, when a plurality of substances corresponding to each component are present in a composition, the content of each component in the composition means the total amount of the plurality of substances present in the composition unless otherwise specified. Furthermore, for upper and lower limits of numerical ranges of the present specification, the numerical values may be optionally selected and combined. Hereinafter, embodiments of the present invention will be described in detail. However, the embodiments shown below exemplify a low-alcohol beer-taste beverage and a method for producing the same for embodying the technical idea of the present invention, and the present invention is not limited to low-alcohol beer-taste beverages, and method for producing the same, which are shown below.

<Low-alcohol beer-taste beverage>

The low-alcohol beer-taste beverage of the present invention contains acetic acid, and proline.

The "low-alcohol beer-taste beverage" means a beer-taste beverage having a lower alcohol concentration than an ordinary beer-taste beverage. Low-alcohol beer-taste beverages have an alcohol concentration of 3 v/v% or less, preferably 2 v/v% or less, and more preferably less than 1 v/v%. The meaning of "low-alcohol beer-taste beverage" also includes non-alcoholic beer-taste beverages which are substantially free of alcohol (for example, alcohol concentration 0.00 v/v%). Also, the wording "alcohol" means ethanol.

<Proline>

Proline is an amino acid contained in malt. The proline contained in the low-alcohol beer-taste beverage may be one commercially available as a compound or one added to the low-alcohol beer-taste beverage, and may also be one contained in a nitrogen-containing raw material to be used in the production of usual low-alcohol beer-taste beverages such as malt.

Proline in the low-alcohol beer-taste beverage is able to impart barley-like sweetness to the low-alcohol beer-taste beverage at a predetermined concentration, and is able to improve the balance between sourness and sweetness of the low-alcohol beer-taste beverage. In addition, proline in the low-alcohol beer-taste beverage is able to enhance the beer-like flavor of the low-alcohol beer-taste beverage at a predetermined concentration.

Proline is contained in the low-alcohol beer-taste beverage in an amount such that the concentration of proline in the low-alcohol beer-taste beverage is more than 100 mg/L and less than 600 mg/L. If the concentration of proline in the low-alcohol beer-taste beverage is 100 mg/L or less, the balance between sourness and sweetness of the low-alcohol beer-taste beverage may be lost. If the concentration of proline in the low-alcohol beer-taste beverage is 600 mg/L or more, the sweetness of proline is noticeable, and the balance between sourness and sweetness of the low-alcohol beer-taste beverage may be lost. The concentration of proline in the low-alcohol beer-taste beverage is, for example, 150 to 550 mg/L, preferably 200 to 500 mg/L, and more preferably 250 to 450 mg/L.

The concentration of proline in the low-alcohol beer-taste beverage may be measured, for example, by the AccqQ-Tag Ultra labeling method using an Acquity UPLC analyzer manufactured by Waters Corporation (USA). It may also be measured using an automatic amino acid analyzer JLC-500/V type manufactured by JEOL Ltd.

The proline concentration of the low-alcohol beer-taste beverage may be adjusted by controlling the amount of raw materials that have a relatively high nitrogen content and that can be assimilated by yeast, or by adding proline as required. The raw materials having a high nitrogen content include, for example, malt, soybeans, yeast extracts, peas, and ungerminated cereals.

<Acetic acid>

Acetic acid is a kind of organic acid produced by yeast during the fermentation period of wort, and is a taste substance having sourness. The acetic acid contained in the low-alcohol beer-taste beverage may be one produced by fermentation of raw materials used in the production of the low-alcohol beer-taste beverage. The acetic acid contained in the low-alcohol beer-taste beverage may also be one commercially available as a sour agent or a compound and added to the low-alcohol beer-taste beverage, or may be one contained in raw materials used in the production of a common low-alcohol beer-taste beverage. The acetic acid contained in the low-alcohol beer-taste beverage may also be one produced by the fermentation process of raw materials used in the production of the low-alcohol beer-taste beverage.

The acetic acid in the low-alcohol beer-taste beverage is able to refresh the aftertaste of the low-alcohol beer-taste beverage at a predetermined concentration, particularly when proline is contained in the low-alcohol beer-taste beverage. Further, the acetic acid in the low-alcohol beer-taste beverage is able to impart sourness to the low-alcohol beer-taste beverage at a predetermined concentration, and is able to improve the balance between sourness and sweetness of the low-alcohol beer-taste beverage. Furthermore, the acetic acid in the low-alcohol beer-taste beverage is able to enhance the beer-like complex taste of the low-alcohol beer-taste beverage at a predetermined concentration.

Acetic acid is contained in the low-alcohol beer-taste beverage in an amount such that the concentration of acetic acid in the low-alcohol beer-taste beverage is more than 25 mg/L and less than 200 mg/L. If the concentration of acetic acid in the low-alcohol beer-taste beverage is 25 mg/L or less, the aftertaste of the low-alcohol beer-taste beverage may not be refreshing and heavy, particularly when proline is contained in the low-alcohol beer-taste beverage. Further, if the concentration of acetic acid in the low-alcohol beer-taste beverage is 200 mg/L or more, the sourness of the low-alcohol beer-taste beverage is noticeable, and the balance between sourness and sweetness of the low-alcohol beer-taste beverage may be lost. The concentration of acetic acid in the low-alcohol beer-taste beverage is preferably 40 to 160 mg/L, more preferably 50 to 150 mg/L, and further preferably 60 to 140 mg/L.

The concentration of acetic acid contained in the low-alcohol beer-taste beverage may be measured, for example, by using HPLC analysis by the pH-buffered post-column electrical conductivity detection method.

The acetic acid concentration of the low-alcohol beer-taste beverage may be adjusted, for example, by controlling the type of yeast and fermentation conditions, or by adding acetic acid as required.

From the viewpoint of improving the balance of sourness and sweetness of the low-alcohol beer-taste beverage, the ratio of acetic acid concentration B [mg/L] to proline concentration A [mg/L] B/A in the low-alcohol beer-taste beverages is preferably from 0.073 to 1.06. The ratio B/A is more preferably 0.17 to 0.50, and further preferably 0.20 to 0.33.

In one embodiment, the ratio B/A is preferably 0.17 to 0.33, more preferably 0.20 to 0.50, and further preferably 0.25 to 0.50.

<Bitterness value>

The low-alcohol beer-taste beverage preferably has a predetermined bitterness value (unit: BU). The low-alcohol beer-taste beverage has a predetermined bitterness value, and thereby the aftertaste of the low-alcohol beer-taste beverage may be more refreshing. Here, the bitterness value is an index of bitterness given by a group of hop-derived substances containing isohumulone as a main component.

The bitterness value of the low-alcohol beer-taste beverage is preferably 10 to 50 BU. If the bitterness value of the low-alcohol beer-taste beverage is less than 10 BU, the aftertaste of the low-alcohol beer-taste beverages may be heavy. If the bitterness value of the low-alcohol beer-taste beverage exceeds 50 BU, the bitterness of the low-alcohol beer-taste beverage is noticeable, and the beer-like complex taste of the low-alcohol beer-taste beverage may be insufficient. The bitterness value of the low-alcohol beer taste beverage is more preferably 15 to 45 BU, further preferably 15 to 40 BU, and particularly preferably 20 to 35 BU.

The bitterness value may be measured, for example, by the method described in "BCOJ Beer Analysis Method, 8.15 (2004)", edited by the Beer Brewery Association.

The bitterness value of the low-alcohol beer-taste beverages may be adjusted by controlling the varieties of raw materials containing a bitterness substance (for example, hops and the like), the amounts thereof used, the timing of the raw materials added, and the like, or by appropriately adding the bitterness substance. Isolated iso-$\alpha$ acids may be used as the bitter substance. The iso-$\alpha$ acids are contained in hops, and they may also be employed as hops or a hop extract. The hops or hop extract means hop leaves, a ground product thereof, an extraction liquid obtained by extracting these with water or boiling water, a concentrate and a dried product of the extraction liquid.

<Components derived from wort fermented liquid>

The low-alcohol beer-taste beverage of the present invention preferably contains a component derived from a wort fermented liquid. The low-alcohol beer-taste beverage contains the components derived from the wort fermented liquid, and thereby the beer-like complex taste of the low-alcohol beer-taste beverage may be enhanced.

The components derived from the wort fermented liquid mean components contained in the wort fermented liquid. The wort fermented liquid means a liquid obtained by fermenting wort used in the production of ordinary beer using beer yeast.

The amounts and concentrations of the components derived from the wort fermented liquid contained in the low-alcohol beer-taste beverage are not particularly limited, and may be appropriately set according to the desired flavor.

The wort fermented liquid may be a wort top fermented liquid or a wort bottom fermented liquid. From the viewpoint of refreshing the aftertaste, the wort bottom fermented liquid is preferred. The wort top fermented liquid means a wort fermented liquid prepared by inoculating top fermenting yeast to wort, and fermenting under usual fermentation conditions, for example, at 15 to 25°C for several days. The wort bottom fermented liquid means a wort fermented liquid prepared by inoculating bottom fermenting yeast to wort, and fermenting under usual fermentation conditions, for example, at around 10°C for about one week.

The wort fermented liquid has a malt use ratio with a predetermined concentration. The malt use ratio is the ratio of the weight of malt to the weight of starchy raw material. The malt use ratio in the wort fermented liquid is, for example, 50 w/w% or more. If the malt use ratio of the wort fermented liquid contained in the low-alcohol beer-taste beverage is less than 50 w/w%, the beer-like complex taste and barley-like sweetness of the low-alcohol beer-taste beverage may be insufficient. The malt use ratio of the wort fermented liquid contained in the low-alcohol beer taste beverage is preferably 55 w/w% or more, more preferably 60 w/w% or more, and further preferably 60 to 75 w/w%.

The wort fermented liquid may be an alcohol-removed wort fermented liquid. The alcohol-removed wort fermented liquid is a wort fermented liquid obtained by removing alcohol from the liquid obtained by fermenting the wort, the wort fermented liquid being used in the production of ordinary beer. The method for removing alcohol includes a method for vaporizing alcohol, a method for removing alcohol with a reverse osmosis membrane, and the like. For the alcohol-removed wort fermented liquid, alcohol may be removed to an extent that the alcohol content of the low-alcohol beer-taste beverage in the final product becomes the desired concentration.

The low-alcohol beer-taste beverage may be one containing an alcohol-removed wort fermented liquid, or may be one in which the proline concentration and the acetic acid concentration are appropriately adjusted using an alcohol-removed wort fermented liquid as a base liquid.

The apparent extract concentration of the low-alcohol beer-taste beverage is adjusted from 1 to 10 w/v%. If the apparent extract concentration of the low-alcohol beer-taste beverage is less than 1 w/v%, the beer-like complex taste and barley-like sweetness of the low-alcohol beer-taste beverage may be insufficient. In addition, if the apparent extract concentration of the low-alcohol beer-taste beverage exceeds 10 w/v%, the aftertaste of the low-alcohol beer-taste beverage may be heavy. The apparent extract concentration of the low-alcohol beer-taste beverage is preferably 2 to 9 w/v %, more preferably 2 to 8 w/v%, and further preferably 3 to 7 w/v%.

In one embodiment, the apparent extract concentration of the low-alcohol beer-taste beverage is preferably 3 to 9.5 w/v%, more preferably 5 to 9 w/v%, and further preferably 6 to 8.5 w/v%.

The apparent extract concentration of the low-alcohol beer-taste beverage may be measured, for example, by the method described in "BCOJ Beer Analysis Method (2004)", edited by the Beer Brewery Association. The low-alcohol beer-taste beverage may be produced, for example, by the method for producing a low-alcohol beer-taste beverage, which will be described below.

The apparent extract concentration of the low-alcohol beer-taste beverage may be adjusted by controlling the degree of fermentation of wort, or by increasing or decreasing the content of the liquid sugar or wort fermented liquid, and the like.

<Method for producing low-alcohol beer-taste beverages

The method for producing a low-alcohol beer-taste beverage includes a step of adjusting the concentration of acetic acid contained in the low-alcohol beer-taste beverage to a predetermined concentration, and a step of adjusting the concentration of proline contained therein to a predetermined concentration. In addition to these steps, a conventional method for producing a low-alcohol beer-taste beverage may be used.

The method for producing a low-alcohol beer-taste beverage in the present specification may include an acetic acid concentration adjustment step of adjusting the concentration of acetic acid in the low-alcohol beer-taste beverage to a predetermined concentration; and a proline concentration adjustment step of adjusting the concentration of proline in the low-alcohol beer-taste beverage to a predetermined concentration. The order of the acetic acid concentration adjustment step, and the proline concentration adjustment step is not particularly limited, and whichever may be performed first.

The proline concentration adjustment step may include adjusting the concentration of proline in the low-alcohol beer-taste beverage to the above-mentioned range.

The acetic acid concentration adjustment step may include adjusting the concentration of acetic acid in the low-alcohol beer-taste beverage to the above-mentioned range.

Further, the method for producing a low-alcohol beer-taste beverage may include a fermentation step, an alcohol-removing step, a bitterness value adjustment step, a wort fermented liquid-derived component addition step or an apparent extract concentration adjustment step.

The bitterness value adjustment step may include adjusting the bitterness value of the low-alcohol beer-taste beverage to the above-mentioned range.

The wort fermented liquid-derived component addition step may include including a component derived from a wort fermented liquid in the low-alcohol beer-taste beverage. At this stage, the wort fermented liquid itself may be included in the low-alcohol beer-taste beverage, or a low-alcohol beer-taste beverage may be prepared based on the wort fermented liquid.

The apparent extract concentration adjustment step may include adjusting the apparent extract concentration of the low-alcohol beer-taste beverage to the above-mentioned range.

The alcohol-removing step is a step of removing alcohol from a beer-taste beverage, a wort fermented liquid, a beer composition, and the like to an extent that the alcohol content of the low-alcohol beer-taste beverage in the final product becomes the desired concentration. The method for removing alcohol includes a method for vaporizing alcohol, a method for removing alcohol with a reverse osmosis membrane, and the like. A method for vaporizing alcohol is preferred because the alcohol can be removed in a relatively short time.

The fermentation step may be any step so long as it is a step of adding yeast to wort and performing fermentation, and necessary conditions such as fermentation temperature, and fermentation period may appropriately be adjusted. For example, it may be fermented under the conditions of 8 to 25°C for 1 week to 10 days, which are the fermentation conditions for the production of ordinary beer or low-malt beer. Further, the temperature (increasing or decreasing the temperature) or pressure of the fermented liquid may be changed in the middle of the fermentation step.

The method for producing a low-alcohol beer-taste beverage may further include a step of adding hops, caramel coloring and the like, a boiling step, a pH adjustment step, a filtration step, a flavor adjustment step, a step of dissolving carbon dioxide gas, and the like using a conventional apparatus and the like.

The method for producing a low-alcohol beer-taste beverage may further include a step of adding dietary fiber, soybean peptides,hop extracts, carbonic acid, extracts, flavorings, sour agents, sweetening agents, bittering agents, coloring agents, antioxidants, pH adjusting agents, various nutritional components and the like.

The present invention will be described in more detail with reference to the following examples, but the present invention is not limited to these.

[Examples]

<Analysis method for low-alcohol beer-taste beverages>

The evaluation method for the low-alcohol beer taste beverage will be described below.

[Apparent extract]

The apparent extract concentration was obtained by the following formula (1) according to the method described in "BCOJ Beer Analysis Method (2004)", edited by the Beer Brewery Association.

$$\text{Es end} = -460.234 + 662.649 \times \text{SGEA} - 202.414 \times \text{SGEA2} \quad (1)$$

In the formula, "Es end" is the apparent extract concentration, and
"$SG_{EA}$" is the specific gravity of gas-removed low-alcohol beer-taste beverages.

[Bitterness value]

The bitterness value was measured according to "BCOJ Beer Analysis Method, 8.15 (2004)", edited by the Beer Brewery Association. Specifically, an acid was added to a sample, followed by extraction with isooctane and centrifugal treatment to obtain an isooctane layer. Absorbance of the isooctane layer at 275 nm using pure isooctane as control was measured. The absorbance was multiplied by the constant (50) to obtain the bitterness value (BU).

[Concentration of acetic acid]

Acetic acid concentration was measured with HPLC analysis by a pH buffered post-column electrical conductivity detection method. A sample was filtered through a 0.45 um filter and then subjected to measurement. An organic acid analysis system (manufactured by Shimadzu Corporation) was used. RSpak KC 811 (manufactured by Shodex Corporation) as a column, 5 mmol/L p-toluenesulfonic acid as a mobile phase, and a flow rate of 0.8 mL/min were used to separate the organic acids. An electrical conductivity detector (CDD-10 Avp, manufactured by Shimadzu Corporation) was used as a detector. In order for quantification, a standard substance was added to the sample, and a calibration curve was prepared.

[Concentration of proline]

The concentration of proline in the low-alcohol beer-taste beverage was measured by the AccqQ-Tag Ultra labeling method using an Acquity UPLC analyzer manufactured by Waters Corporation (USA). A calibration curve was prepared using an amino acid mixed standard solution H-type (manufactured by FUJIFILM Wako Pure Chemical Corporation).

<Comparative Example>

10 g of liquid sugar, 0.3 g of caramel, 0.7 g of phosphoric acid, and 1.0 g of flavoring were mixed with a small amount of drinking water. Predetermined amounts of dextrin and an isomerized hop extract (manufactured by John I. Haas, Inc.) were added thereto, and drinking water was added until the volume reached 1 liter. Further, carbon dioxide gas was dissolved so that the gas pressure became 0.22 MPa to prepare a standard product for a low-alcohol beer-taste beverage. This was used as a comparative example. The apparent extract concentration of the comparative example was 8 w/v%, and the bitterness value was 25 BU.

<Examples 1 to 6>

The concentration of proline was adjusted to 300 mg/L by adding proline to the comparative example. Furthermore, the concentrations of acetic acid were adjusted to 25 mg/L, 50 mg/L, 100 mg/L, 150 mg/L, 200 mg/L, and 250 mg/L, respectively, by adding acetic acid to obtain low-alcohol beer-taste beverages of Examples 1 to 6.

<Examples 7 to 11>

The concentration of acetic acid was adjusted to 100 mg/L by adding acetic acid to the comparative example. Furthermore, the concentrations of proline were adjusted to 100 mg/L, 200 mg/L, 400 mg/L, 500 mg/L, and 600 mg/L, respectively, by adding proline to obtain low-alcohol beer-taste beverages of Examples 7 to 11.

<Sensory Evaluation>

Next, the sensory evaluation of the produced low-alcohol beer-taste beverage was performed. The evaluation items were "balance of sourness and sweetness", "beer-like complex taste", "barley-like sweetness", and "refreshness of aftertaste". Since these evaluation items are affected by conditions other than the acetic acid concentration and the proline concentration, the conditions other than the acetic acid concentration and the proline concentration were set to be constant.

Five panelists specialized in beer-taste beverages performed sensory evaluations on Comparative Example and Examples 1 to 11. The evaluation criteria were as follows. A preliminary test was conducted on the panelists, and it was confirmed that there was no significant difference in the scores among the panelists. The average value of evaluations of the respective panelists were used as the evaluation results of Comparative Example and Examples 1 to 11. The evaluation results are shown in Table 1.

The "balance of sourness and sweetness" was evaluated on a five-levels scale in which the score of the comparative example was set at 3 points, and the score of the best sample was graded as 5 points.

The "beer-like complex taste" was evaluated on a 5-levels scale in which the score of the comparative example was set at 3 points, and the score of the best sample was graded as 5 points.

**EP 4 317 391 A1**

The "barley-like sweetness" was evaluated on a 5-levels scale in which the score of the comparative example was set at 2 points, and the score of the best sample was graded as 5 points.

The "refreshness of aftertaste" was evaluated on a 5-levels scale in which the score of the comparative example was set at 3 points, and the score of the best sample was graded as 5 points.

For all evaluation items, if the average of scores was 3.0 or higher, beer-like flavor was recognized; the comprehensive evaluation was "A: good", and if the score was less than 3.0 for any of the evaluation items, beer-like flavor was not recognized; the comprehensive evaluation was "B: inferior".

[Table 1]

| | Comp. Example | Examples | | | | | | | | | | | |
|---|---|---|---|---|---|---|---|---|---|---|---|---|---|
| | | 1 | 2 | 3 | 4 | 5 | 6 | 7 | 8 | 9 | 10 | 11 |
| Apparent extract (w/v%) | 8 | 8 | 8 | 8 | 8 | 8 | 8 | 8 | 8 | 8 | 8 | 8 |
| Bitterness value (BU) | 25 | 25 | 25 | 25 | 25 | 25 | 25 | 25 | 25 | 25 | 25 | 25 |
| Acetic acid B (mg/L) | 8 | 25 | 50 | 100 | 150 | 200 | 250 | 100 | 100 | 100 | 100 | 100 |
| Proline A (mg/L) | 2 | 300 | 300 | 300 | 300 | 300 | 300 | 100 | 200 | 400 | 500 | 600 |
| Ratio B/A | 4.0 | 0.08 | 0.17 | 0.33 | 0.50 | 0.67 | 0.83 | 1.00 | 0.50 | 0.25 | 0.20 | 0.17 |
| Balance of sourness and sweetness | 3.0 | 2.4 | 3.4 | 4.8 | 3.4 | 2.8 | 2.4 | 2.4 | 3.4 | 4.0 | 3.0 | 2.4 |
| Beer-like complex taste | 3.0 | 3.2 | 3.8 | 4.8 | 4.8 | 4.8 | 4.8 | 3.2 | 3.8 | 4.8 | 4.6 | 4.6 |
| Barley-like sweetness | 2.0 | 4.2 | 4.2 | 4.2 | 4.2 | 4.2 | 4.2 | 4.6 | 4.6 | 4.6 | 4.8 | 4.8 |
| Refreshness of aftertaste | 3.0 | 3.4 | 4.0 | 4.8 | 4.8 | 4.2 | 4.0 | 3.4 | 4.0 | 4.2 | 3.2 | 2.6 |
| Comprehensive evaluation | B | B | A | A | A | B | B | B | A | A | A | B |

From Table 1, it can be seen that, by setting the concentration of acetic acid from 50 to 250 mg/L, the aftertaste of the low-alcohol beer-taste beverage becomes refreshing. Further, it can be seen that, by setting the concentration of proline from 200 to 600 mg/L or more, the beer-like complex taste of the low-alcohol beer-taste beverage may be enhanced. Furthermore, it can be seen that, by setting the concentration of acetic acid from 50 to 150 mg/L, and the concentration of proline from 200 to 500 mg/L, the low-alcohol beer-taste beverage has a beer-like complex taste and barley-like sweetness, has a good balance between sourness and sweetness, and exhibits a refreshing aftertaste.

## Claims

1. A low-alcohol beer-taste beverage containing more than 100 mg/L and less than 600 mg/L of proline, and more than 25 mg/L and less than 200 mg/L of acetic acid.

2. The low-alcohol beer-taste beverage according to claim 1, wherein the concentration of proline is 150 to 550 mg/L.

3. The low-alcohol beer-taste beverage according to claim 1 or 2, wherein the concentration of acetic acid is 40 to 160 mg/L.

4. The Low-alcohol beer taste beverage according to any one of claims 1 to 3, wherein the ratio of acetic acid concentration B [mg/L] to proline concentration A [mg/L] in the low-alcohol beer taste beverage B/A is 0.073 to 1.06.

5. The low-alcohol beer-taste beverage according to any one of claims 1 to 4, wherein the ratio B/A is 0.17 to 0.50.

6. The low-alcohol beer-taste beverage according to any one of claims 1 to 5, having a bitterness value of 10 to 50 BU.

7. The low-alcohol beer-taste beverage according to any one of claims 1 to 6, having an apparent extract concentration of 1 to 10 w/v%.

8. The low-alcohol beer-taste beverage according to any one of claims 1 to 7, containing a component derived from a wort fermented liquid.

9. The low-alcohol beer-taste beverage according to claim 8, wherein the wort fermented liquid is a wort bottom fermented liquid.

10. The low-alcohol beer-taste beverage according to claim 8 or 9, wherein the wort fermented liquid has a malt use ratio of 50 w/w% or more.

11. The low-alcohol beer-taste beverage according to any one of claims 8 to 10, wherein the wort fermented liquid is an alcohol-removed wort fermented liquid.

12. A method for producing a low-alcohol beer-taste beverage comprising: adjusting the concentration of proline contained in a low-alcohol beer-taste beverage from more than 100 mg/L to less than 600 mg/L, and adjusting the concentration of acetic acid contained therein from more than 25 mg/L to less than 200 mg/L.

## INTERNATIONAL SEARCH REPORT

| International application No. |
|---|
| **PCT/JP2022/013190** |

**A. CLASSIFICATION OF SUBJECT MATTER**

*C12C 5/02*(2006.01)i; *C12C 12/04*(2006.01)i; *C12G 3/04*(2019.01)i; *A23L 2/00*(2006.01)i
FI: C12C12/04; C12C5/02; C12G3/04; A23L2/00 B

According to International Patent Classification (IPC) or to both national classification and IPC

**B. FIELDS SEARCHED**

Minimum documentation searched (classification system followed by classification symbols)

C12C5/02; C12C12/04; C12G3/04; A23L2/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY/MEDLINE/EMBASE/BIOSIS/FSTA/AGRICOLA (STN)

**C. DOCUMENTS CONSIDERED TO BE RELEVANT**

| Category* | Citation of document, with indication, where appropriate, of the relevant passages | Relevant to claim No. |
|---|---|---|
| A | JP 2015-122970 A (KAO CORP.) 06 July 2015 (2015-07-06)<br>claims 1-14, examples 23, 28 | 1-12 |
| A | JOHNSON, Sarah R. et al. Nuclear Magnetic Resonance and Headspace Solid-Phase Microextraction Gas Chromatography as Complementary Methods for the Analysis of Beer Samples. Beverages. 2017, vol. 3, no. 21, pp. 1-10, doi:10.3390/beverages3020021<br>particularly, table 3 | 1-12 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **12 May 2022** | **24 May 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2022/013190**

| Patent document cited in search report | Publication date (day/month/year) | Patent family member(s) | Publication date (day/month/year) |
|---|---|---|---|
| JP 2015-122970 A | 06 July 2015 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003250503 A
- JP 2020103272 A

- JP 2018148838 A

**Non-patent literature cited in the description**

- BCOJ Beer Analysis Method. 2004

- BCOJ Beer Analysis Method. 2004, vol. 8